# FASCICULE DE BREVET EUROPEEN

(11) **EP 1 570 492 B1**
(45) Date de publication et mention de la délivrance du brevet: **01.09.2010**
(21) Numéro de dépôt: 03796152.1
(22) Date de dépôt: 03.12.2003
(51) Int. Cl.: G21C 19/20

(54) **PROCEDE ET DISPOSITIF DE CHARGEMENT D'UN ASSEMBLAGE DE COMBUSTIBLE DANS LE COEUR D'UN REACTEUR NUCLEAIRE**
VERFAHREN UND VORRICHTUNG ZUM LADEN EINES BRENNSTABBÜNDELS IN DIE SPALTZONE EINES KERNREAKTORS
METHOD AND DEVICE FOR LOADING A FUEL ASSEMBLY INTO THE CORE OF A NUCLEAR REACTOR

(30) Priorité: 10.12.2002 FR 0215607
(43) Date de publication de la demande: 07.09.2005
(73) Titulaire: Areva NP, 92400 Courbevoie (FR); REEL S.A., F-69450 Saint Cyr au Mont d'Or (FR)
(72) Inventeur: JUBLOT, Patrice, F-92600 ASNIERES (FR)
(74) Mandataire: Domenego, Bertrand
(86) Numéro de dépôt international: PCT/FR2003/003579
(87) Numéro de publication internationale: WO 2004/064076

(56) Documents cités:
- DE-A- 3 401 272
- US-A- 3 603 634
- US-A- 4 788 028
- US-A- 5 619 547

## Description

L'invention concerne un procédé et un dispositif de chargement d'un assemblage de combustible dans le coeur d'un réacteur nucléaire et en particulier dans le coeur d'un réacteur nucléaire refroidi par de l'eau sous pression.

Les réacteurs nucléaires refroidis par de l'eau sous pression comportent, à l'intérieur d'une cuve, le coeur du réacteur nucléaire constitué par des assemblages de combustible, généralement de forme prismatique droite, qui sont placés avec leurs axes longitudinaux dans la direction verticale, suivant laquelle circule, de bas en haut, l'eau de refroidissement sous pression du réacteur nucléaire.

Les assemblages de combustible du coeur du réacteur sont disposés à l'intérieur d'équipements internes inférieurs de la cuve du réacteur nucléaire comportant en particulier une plaque de support du coeur, ou plaque inférieure de coeur, et un cloisonnement constitué par des plaques verticales assurant le maintien des assemblages périphériques du coeur.

Les assemblages de combustible du coeur viennent reposer sur la plaque de support du coeur, par l'intermédiaire de leur partie inférieure, ou embout inférieur, qui comporte des ouvertures venant s'engager sur des pions de positionnement à axes verticaux fixés sur la plaque de support du coeur. Les assemblages de combustible juxtaposés constituent un ensemble dense dans lequel chacun des assemblages de combustible est au contact d'assemblages voisins, à l'intérieur d'un emplacement ayant une forme prismatique droite dont la position est parfaitement définie à l'intérieur du coeur, l'emplacement d'un assemblage de combustible étant délimité par des plans verticaux constituant l'enveloppe géométrique de l'assemblage de combustible de forme prismatique droite. Les faces planes verticales virtuelles de chacun des assemblages de combustible dans le coeur sont également les surfaces de contact entre l'assemblage de combustible et les assemblages voisins dans le coeur ou encore les surfaces internes d'une ou plusieurs cloisons verticales du cloisonnement.

Les sections transversales droites des emplacements des assemblages de combustible dans le coeur, dans des plans transversaux perpendiculaires à l'axe vertical du coeur, constituent un réseau régulier dans toute la section du coeur.

Les assemblages de combustible présentent généralement une section droite de forme carrée et leurs emplacements constituent un réseau à maille carrée dans toute la section du coeur à l'intérieur du cloisonnement.

Les assemblages de combustible, généralement à section carrée, comportent des grilles-entretoises de maintien d'un faisceau de crayons combustibles parallèles de direction axiale et, aux extrémités de l'assemblage, un embout supérieur et l'embout inférieur par l'intermédiaire duquel l'assemblage repose sur la plaque de support du coeur. A l'intérieur du coeur, les assemblages de combustible sont en contact avec les assemblages combustibles voisins, par l'intermédiaire de leurs grilles-entretoises et de leurs embouts.

Le matériau combustible fissile contenu dans les crayons des assemblages de combustible est consommé progressivement dans le réacteur nucléaire en service, si bien que les assemblages de combustible sont appauvris progressivement en matériau combustible fissile et subissent une certaine usure. Il est nécessaire d'effectuer périodiquement des opérations de rechargement du coeur du réacteur nucléaire. Ces opérations qui nécessitent un arrêt et un refroidissement du réacteur nucléaire consistent à remplacer une partie des assemblages de combustible disposés dans une zone du coeur par des assemblages neufs, les autres assemblages du coeur qui ne sont pas remplacés par des assemblages neufs étant déplacés d'une zone à une autre du coeur. Lors de la mise en service initiale du réacteur nucléaire, il est nécessaire d'effectuer le chargement du coeur avec des assemblages de combustible neufs constituant la première charge du réacteur nucléaire.

Les opérations de chargement ou de rechargement d'un réacteur nucléaire sont réalisées sous eau, le couvercle de la cuve étant démonté, depuis le niveau supérieur de la piscine du réacteur dans le fond de laquelle débouche le puits de cuve.

Pour effectuer les opérations de chargement et de rechargement, on utilise une machine de levage et de manutention des assemblages de combustible appelée machine de chargement qui comporte des moyens de déplacement et de guidage dans des directions horizontales disposées au-dessus du niveau supérieur de la piscine, de manière à pouvoir placer des moyens de préhension et de levage de la machine de chargement à l'aplomb de chacun des emplacements d'assemblages de combustible dans le coeur du réacteur nucléaire.

Pour effectuer le chargement d'un assemblage de combustible dans un emplacement à l'intérieur du coeur, on déplace l'assemblage dont on assure le chargement fixé en position verticale aux moyens de préhension de la machine de chargement puis on introduit l'assemblage de combustible dans son emplacement de chargement par des déplacements de la machine de chargement et de ses moyens de préhension et de levage.

Dans le réacteur en fonctionnement, les assemblages de combustible qui sont soumis à l'irradiation et qui sont le siège d'un dégagement de chaleur intense peuvent subir des déformations. Du fait que les assemblages de combustible sont de forme très élancée, leur section transversale présentant des dimensions très inférieures à leur longueur axiale, ils peuvent subir, par exemple par flambage, des déformations se traduisant par un déport relativement important de leurs embouts d'extrémité par rapport à la position théorique de ces embouts centrée sur l'axe de l'assemblage de combustible.

De ce fait, les parties supérieures des assemblages de combustible voisins d'un emplacement dans lequel on doit effectuer le chargement d'un assemblage de combustible sont susceptibles de se trouver déportées vers l'intérieur de l'emplacement théorique de chargement de l'assemblage de combustible, du fait de leur déformation par flambage. En conséquence, il peut être très difficile dans certains cas d'assurer l'introduction de l'assemblage de combustible dans son emplacement pour effectuer son chargement. En particulier, les emplacements des assemblages périphériques sont délimités suivant une ou deux faces verticales par le cloisonnement et suivant leurs autres faces par des assemblages de combustible voisins des assemblages périphériques. La déformation des parties supérieures des assemblages de combustible voisins des assemblages périphériques en direction du cloisonnement peut limiter l'espace d'introduction de l'assemblage de combustible périphérique dans le coeur, de telle sorte que son chargement s'avère très difficile ou impossible.

De manière générale, la déformation des assemblages de combustible utilisés pour le rechargement d'un coeur de réacteur nucléaire peut compliquer et allonger considérablement les opérations de rechargement, ce qui fait perdre beaucoup de temps sur le chemin critique de l'arrêt de la tranche de la centrale nucléaire.

Pour faciliter l'introduction d'un assemblage de combustible dans son emplacement à l'intérieur du coeur, on a proposé d'utiliser des faux assemblages ou des faux embouts d'assemblages de combustible qui sont mis en place sur la plaque de support du coeur autour d'un emplacement dans lequel on réalise l'introduction de l'assemblage de combustible à recharger. Ces dispositifs permettent d'améliorer sensiblement la mise en place des assemblages de combustible déformés dans le coeur mais leur utilisation est complexe du fait que ces dispositifs doivent être mis en place et récupérés dans le fond de la piscine du réacteur avant et après la mise en place de l'assemblage de combustible. En outre, de tels dispositifs ne permettent pas de réaliser un chargement continu par mises en place successives d'assemblages de combustible dans le coeur du réacteur nucléaire ou encore le remplacement d'assemblages de combustible à l'intérieur du coeur dans des emplacements délimités par d'autres assemblages de combustible qui peuvent être déformés.

On a proposé également, dans le FR 99 00457, un dispositif de chargement d'un assemblage de combustible qui permet de faciliter l'engagement des ouvertures de l'embout inférieur de l'assemblage de combustible sur les pions de positionnement de la plaque de support du coeur, à l'emplacement réservé à l'assemblage de combustible. Un tel dispositif ne permet pas non plus de faciliter l'introduction d'un assemblage de combustible dans un emplacement délimité par des assemblages de combustible voisins qui ont été déformés.

Le but de l'invention est donc de proposer un procédé de chargement d'un assemblage de combustible dans un emplacement de chargement du coeur d'un réacteur nucléaire constitué par des assemblages de combustible de forme générale prismatique droite disposés à l'intérieur d'un cloisonnement, dans des emplacements adjacents prismatiques droits à axes verticaux, dont les sections transversales dans un plan horizontal constituent un réseau régulier, l'emplacement de chargement de l'assemblage de combustible comportant au moins une face latérale verticale suivant laquelle est disposée une face latérale d'un assemblage de combustible voisin de l'assemblage de combustible dont on effectue le chargement, ce procédé permettant de faciliter le chargement de l'assemblage de combustible et de limiter le temps nécessaire pour le chargement, dans le cas où l'un au moins des assemblages de combustible voisins de l'assemblage de combustible dont on effectue le chargement est déformé de manière à venir en déport dans l'emplacement de chargement.

Dans ce but :
- on introduit, dans l'emplacement de chargement, un faux assemblage ayant sensiblement la forme et les dimensions de l'emplacement et comportant des parois latérales lisses, substantiellement suivant toute la hauteur de l'emplacement de chargement,
- on fixe la position de l'au moins un assemblage voisin en présence du faux assemblage, par rapport à au moins un second assemblage dans le coeur, au moins dans la partie supérieure de l'assemblage voisin,
- on enlève le faux assemblage de l'emplacement de chargement et,
- on introduit l'assemblage de combustible dont on effectue le chargement à l'intérieur de l'emplacement de chargement.

L'invention concerne également un dispositif de chargement d'un assemblage de combustible dans un emplacement de chargement du coeur d'un réacteur nucléaire constitué par des assemblages de combustible de forme générale prismatique droite disposés à l'intérieur d'un cloisonnement, dans des emplacements adjacents prismatiques droits à axes verticaux dont les sections transversales dans un plan horizontal constituent un réseau régulier, l'emplacement de chargement de l'assemblage de combustible comportant au moins une face latérale verticale suivant laquelle est disposée une face latérale d'un assemblage de combustible voisin de l'assemblage de combustible dont on effectue le chargement, caractérisé par le fait qu'il comporte un outil de recalage des assemblages de combustible sous la forme d'un faux assemblage ayant la forme générale prismatique droite d'un emplacement d'assemblage de combustible dans le coeur et délimité latéralement par des parois lisses, et
- au moins un outil de maintien des assemblages de combustible comportant une plaque support et des pions de positionnement destinés à être engagés dans des ouvertures de positionnement d'embouts supérieurs d'assemblages de combustible du coeur,
- ainsi qu'au moins un moyen de manutention pour la préhension et la manutention de l'outil de recalage des assemblages combustibles et de l'au moins un outil de maintien des assemblages de combustible, par l'intermédiaire d'un moyen de suspension et de maintien.

De préférence :
- le moyen de suspension et de maintien de l'outil de recalage des assemblages de combustible et de l'outil de maintien des assemblages de combustible est analogue à une partie de suspension et de maintien d'un embout supérieur d'un assemblage de combustible du coeur et le dispositif de manutention de l'outil de recalage des assemblages de combustible et de l'outil de maintien des assemblages de combustible est un grappin d'une machine de chargement du réacteur nucléaire ;
- l'outil de recalage des assemblages de combustible comporte un corps central, un embout supérieur et un embout inférieur ayant un axe longitudinal commun et une section transversale dans un plan perpendiculaire à l'axe ayant la forme de la section transversale d'un emplacement d'un assemblage de combustible dans le coeur du réacteur nucléaire ;
- le corps central et l'embout inférieur de l'outil de recalage des assemblages de combustible de forme prismatique droite présentent une section transversale ayant des dimensions inférieures aux dimensions de la section transversale d'un emplacement d'assemblages de combustible dans le coeur, un embout supérieur dont la section transversale a les dimensions de la section transversale d'un emplacement d'assemblage de combustible dans le coeur du réacteur et une partie intermédiaire entre le corps central et l'embout supérieur délimitée par des parois latérales inclinées par rapport à l'axe de l'outil de recalage des assemblages de combustible qui présente une section transversale de dimension généralement croissante entre le corps central et l'embout supérieur ;

- l'outil de recalage des assemblages de combustible comporte un corps central de forme prismatique droite dont la section transversale a les dimensions de la section transversale d'un emplacement d'un assemblage de combustible dans le coeur du réacteur et un embout inférieur ayant des parois latérales inclinées par rapport à l'axe de l'outil de recalage des assemblages de combustible, de manière que la section transversale de l'embout inférieur soit de dimension décroissante entre le corps central et son extrémité inférieure d'engagement dans un emplacement du coeur du réacteur nucléaire ;
- l'embout inférieur de l'outil de recalage comporte des ouvertures latérales de passage de pions de positionnement d'un emplacement du coeur du réacteur et deux plots d'engagement dans des trous d'eau de l'emplacement, lors de la mise en place de l'outil de recalage sur la plaque de support du coeur du réacteur ;
- l'embout inférieur de l'outil de recalage présente une section telle qu'il puisse être engagé entre les pions de positionnement d'un emplacement d'un assemblage de combustible du coeur du réacteur et deux plots d'engagement dans des trous d'eau de l'emplacement, lors de la mise en place de l'outil de recalage sur la plaque de support du coeur du réacteur ;
- les parois inclinées par rapport à l'axe de la partie intermédiaire ou de l'embout inférieur de l'outil de recalage des assemblages de combustible présentent des portions successives, suivant la direction de l'axe, inclinées par rapport à l'axe et sensiblement parallèles à l'axe ;
- l'outil de maintien des assemblages de combustible comporte une plaque support, un premier ensemble de doigts de positionnement et un second ensemble de doigts de positionnement parallèles entre eux et fixés dans des dispositions perpendiculaires à la plaque support, les doigts de
positionnement du second ensemble ayant une longueur dans la direction perpendiculaire à la plaque support inférieure à la longueur des doigts du premier ensemble ;
- les doigts de positionnement du premier ensemble ou doigts longs comportent un fût ayant un premier axe longitudinal et un pointeau d'extrémité dans le prolongement du fût ayant un axe longitudinal décalé par rapport à l'axe du fût, dans une direction perpendiculaire à l'axe du fût ;
- les doigts longs de l'outil de maintien des assemblages de combustible sont fixés sur la plaque de support par des moyens de fixation mécaniques permettant de régler l'orientation du doigt autour de son axe longitudinal et ainsi, la direction du décalage entre les axes du fût du doigt et du pointeau d'extrémité du doigt long ;
- pour le chargement d'assemblages de combustible à section transversale carrée, dans des emplacements prismatiques droits à section carrée du coeur d'un réacteur nucléaire, l'outil de maintien des assemblages de combustible comporte une plaque de support ayant la forme d'un carré dont le côté est sensiblement égal à deux fois le côté de la section transversale d'un emplacement d'assemblage de combustible dans le coeur du réacteur nucléaire, quatre doigts longs dans des positions de trous de positionnement de quatre assemblages de combustible voisins dans le coeur du réacteur nucléaire et quatre doigts courts de longueur inférieure à la longueur des doigts longs dans une direction perpendiculaire à la plaque support dans des positions correspondant aux positions en section transversale de quatre trous de positionnement des quatre assemblages de combustible voisins situés en diagonale sur chacun des embouts supérieurs d'assemblages de combustible par rapport aux trous de positionnement dans les positions des doigts longs ;
- dans le cas d'un coeur d'un réacteur nucléaire constitué par des assemblages de combustible ayant une section transversale carrée disposés dans des emplacements du coeur de forme prismatique droite ayant des sections transversales carrées disposées suivant un réseau à maille carrée, l'outil de maintien des assemblages de combustible comporte une plaque support en forme d'équerre ayant des dimensions correspondant aux dimensions des sections transversales de trois emplacements d'assemblages de combustible voisins dans le coeur, trois pions longs et trois pions courts destinés à être engagées respectivement dans des ouvertures de positionnement de trois assemblages de combustible voisins disposés en équerre dans le coeur du réacteur nucléaire, les pions longs étant introduits dans des premières ouvertures de chacun des assemblages de combustible et les trois pions courts, respectivement, dans trois secondes ouvertures de positionnement des trois assemblages de combustible disposés en équerre situées en diagonale par rapport aux premières ouvertures de réception des pions longs ;
- l'outil de maintien des assemblages de combustible comporte un dispositif de suspension et de maintien analogue à un dispositif de suspension et de maintien d'un embout supérieur d'un assemblage de combustible solidaire de la plaque support sur une face de la plaque de support opposée à une face de la plaque support sur lesquelles sont fixés en saillie les pions de positionnement.

Afin de bien faire comprendre l'invention, on va maintenant décrire, à titre d'exemple, en se référant aux figures jointes en annexe, le procédé de chargement d'un assemblage de combustible suivant l'invention et les dispositifs utilisés pour effectuer le chargement.
La figure 1 est une vue schématique en coupe par un plan horizontal du coeur d'un réacteur nucléaire montrant le réseau des sections droites de forme carrée, des emplacements des assemblages de combustible du coeur.
La figure 2A est une vue en élévation latérale d'un faux assemblage pour la mise en oeuvre du procédé suivant l'invention, suivant une première forme de réalisation.
La figure 2B est une vue en élévation latérale d'un faux assemblage pour la mise en oeuvre du procédé selon l'invention, selon une seconde forme de réalisation.
La figure 2C est une vue agrandie d'un détail de la figure 2A ou de la figure 2B.
Les figures 3A et 3B sont relatives à une première variante de réalisation de l'embout inférieur d'un faux assemblage.
Les figures 4A et 4B sont relatives à une seconde variante de réalisation de l'embout inférieur d'un assemblage de combustible.

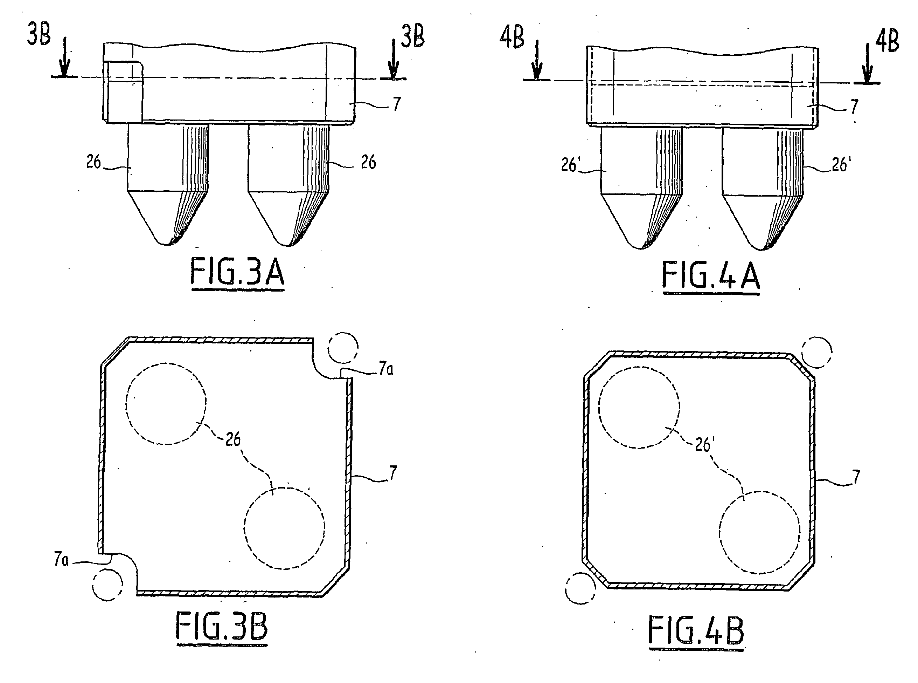

Les figures 3A et 4A sont des vues en élévation latérale de l'embout.
Les figures 3B et 4B sont des vues en coupe suivant B-B des figures 3A et 4A, respectivement.

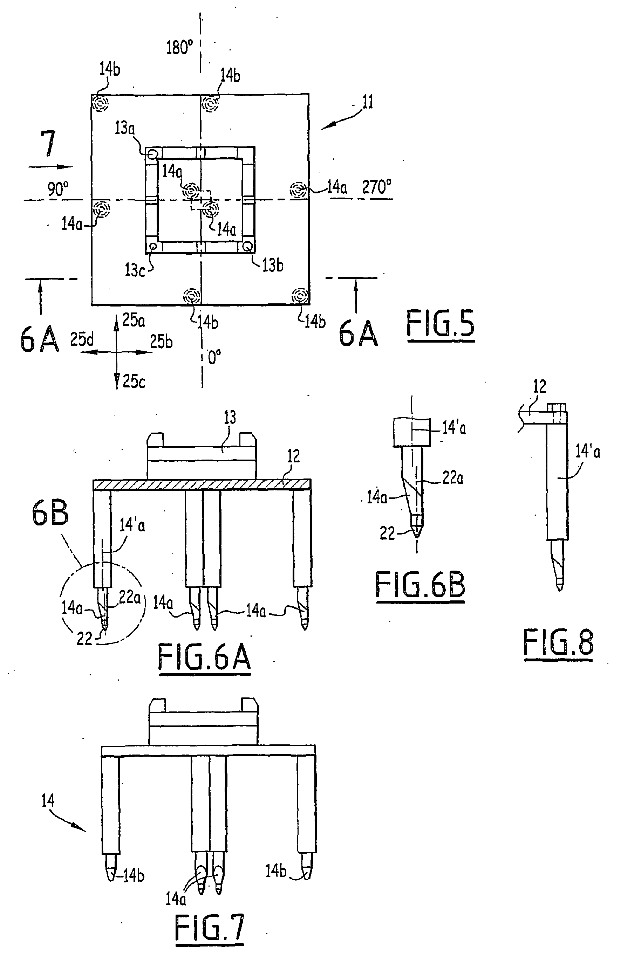

La figure 5 est une vue de dessus d'un outil de maintien des assemblages de combustible voisins d'un emplacement de chargement.
La figure 6A est une vue en élévation et en coupe verticale partielle de l'outil de maintien, suivant 6A de la figure 5.
La figure 6B est une vue agrandie du détail B de la figure 6A.
La figure 7 est une vue en élévation de l'outil de maintien suivant 7 de la figure 5.
La figure 8 est une vue de détail d'un pion de l'outil de maintien réalisé suivant une variante permettant le réglage de l'orientation du pion.

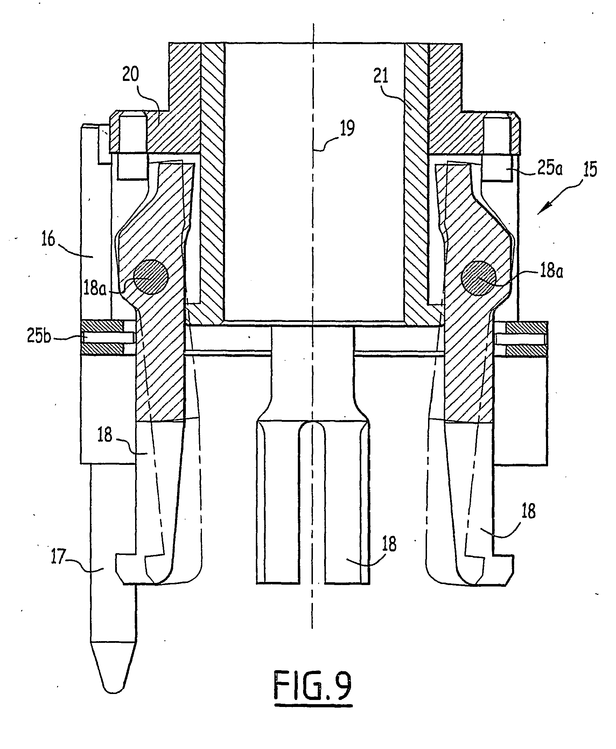

La figure 9 est une vue en élévation et en coupe verticale d'un grappin de manutention de l'outil de maintien tel que représenté sur la figure 5.

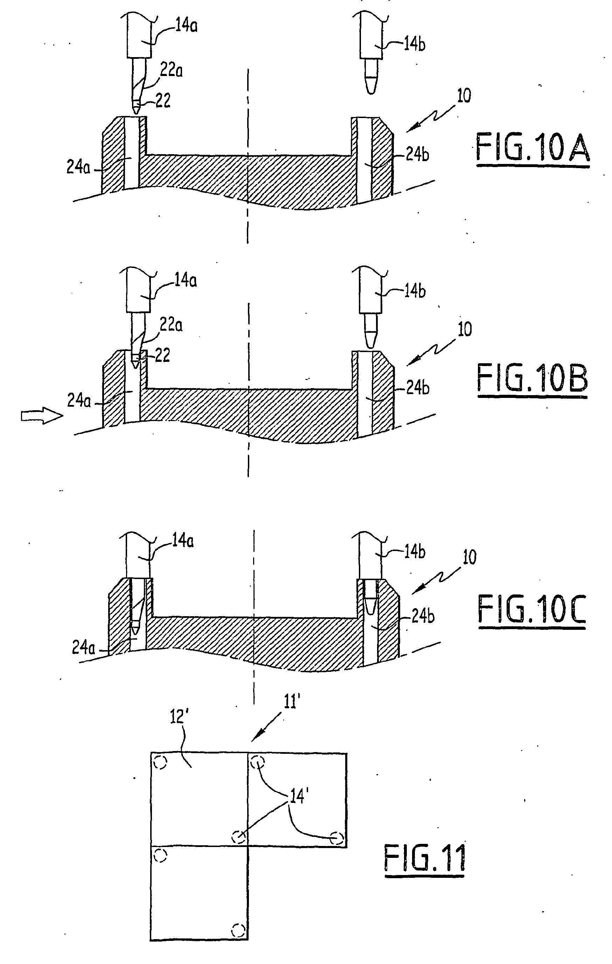

Les figures 10A, 10B et 10C montrent la mise en place de l'outil de maintien sur un assemblage de combustible au cours de trois phases successives.
La figure 11 est une vue de dessus analogue à la vue de la figure 5 d'un outil de maintien suivant une variante de réalisation.

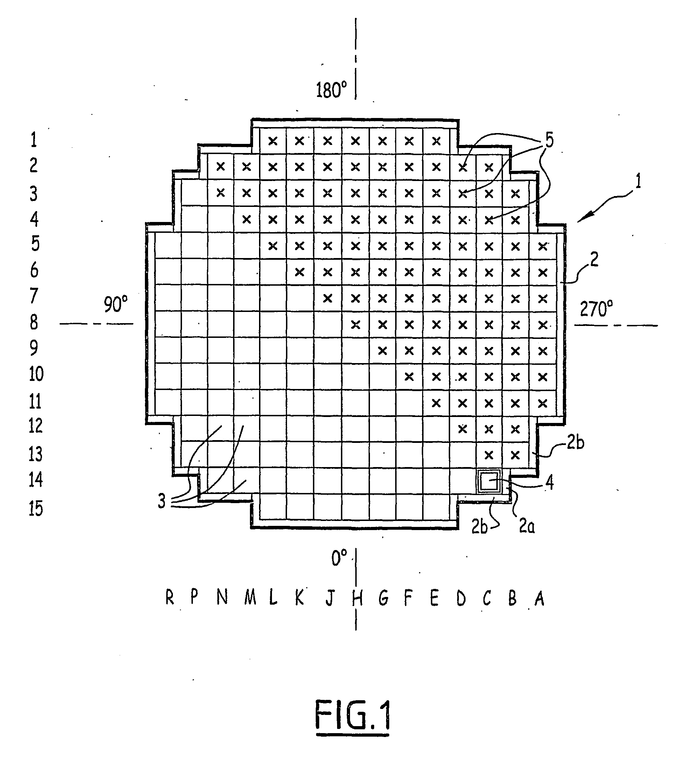

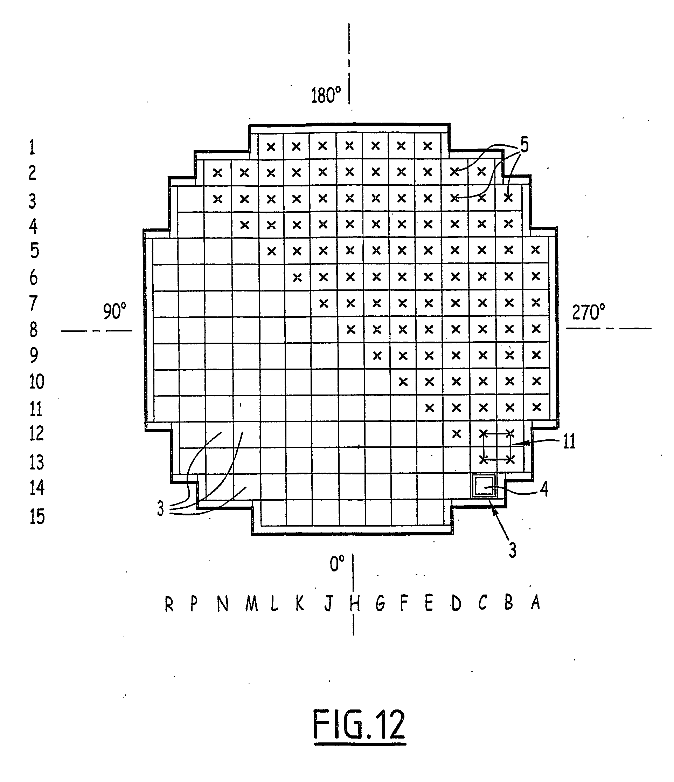

La figure 12 est une vue schématique d'une section transversale du coeur d'un réacteur nucléaire analogue à la vue de la figure 1 montrant la mise en oeuvre du procédé de chargement suivant l'invention.

Sur la figure 1 on a représenté de manière schématique la section transversale du coeur 1 d'un réacteur nucléaire qui est délimité par un cloisonnement 2 comportant en particulier des plaques verticales telles que 2a et 2b présentant différentes largeurs et assemblées entre elles à angle droit suivant le contour périphérique du coeur. Le coeur 1 et le cloisonnement 2 sont disposés à l'intérieur de la cuve du réacteur nucléaire à eau sous pression, de manière à reposer, par leur partie inférieure, sur une plaque de support du coeur fixée à l'intérieur de la cuve du réacteur.

Sur la figure 1, on a représenté les sections des emplacements 3 des assemblages de combustible de forme prismatique droite à section carrée. Les sections carrées des emplacements 3 d'assemblages de combustible dans le coeur 1 constituent un réseau à maille carrée à l'intérieur du cloisonnement 2.

Sur la figure 1, on a représenté le coeur 1 du réacteur nucléaire en cours de chargement, les emplacements 3 d'assemblages de combustible dans lequel un assemblage a déjà été placé au cours du chargement étant repérés par des croix.

Le chargement est réalisé suivant des diagonales successives du réseau à maille carrée d'emplacements de chargement du coeur.

On a également indiqué sur la figure 1, l'orientation des plans de symétrie axiale du coeur par les angles 0°, 90°, 180° et 270° dans le sens horaire.

On a repéré la position des emplacements 3 d'assemblages de combustible dans le coeur par l'indication des rangées d'emplacements parallèles au plan axial 0°-180°, sous la forme des lettres successives A, B, ..., R et des rangées parallèles au plan axial 90°-270° par les chiffres 1, 2, ..., 15.

On décrira par la suite, en particulier en se référant aux figures 1 et 12, le chargement d'un assemblage de combustible dans l'emplacement C14 délimité suivant deux faces latérales par le cloisonnement et suivant une face latérale par un assemblage de combustible voisin situé en C13 et présentant une face libre non délimitée par un assemblage de combustible ou par le cloisonnement. On supposera que l'assemblage de combustible situé en C13 qui a été chargé précédemment dans le coeur 1 du réacteur nucléaire est déformé par flambage, de sorte qu'une partie de l'assemblage et en particulier une partie supérieure de l'assemblage vient en déport à l'intérieur de l'emplacement C14 dans lequel on désire charger un assemblage de combustible. Du fait du déport de l'assemblage de combustible placé en C13 dans l'emplacement C14, la section restante de l'emplacement C14 ne permet pas le passage et l'introduction de l'assemblage de combustible dont on désire assurer le chargement.

Le procédé suivant l'invention consiste, dans une première phase, à introduire un faux assemblage 4 dans l'emplacement C14 pour repousser la partie en déport de l'assemblage de combustible située en C13 en dehors de l'emplacement C14.

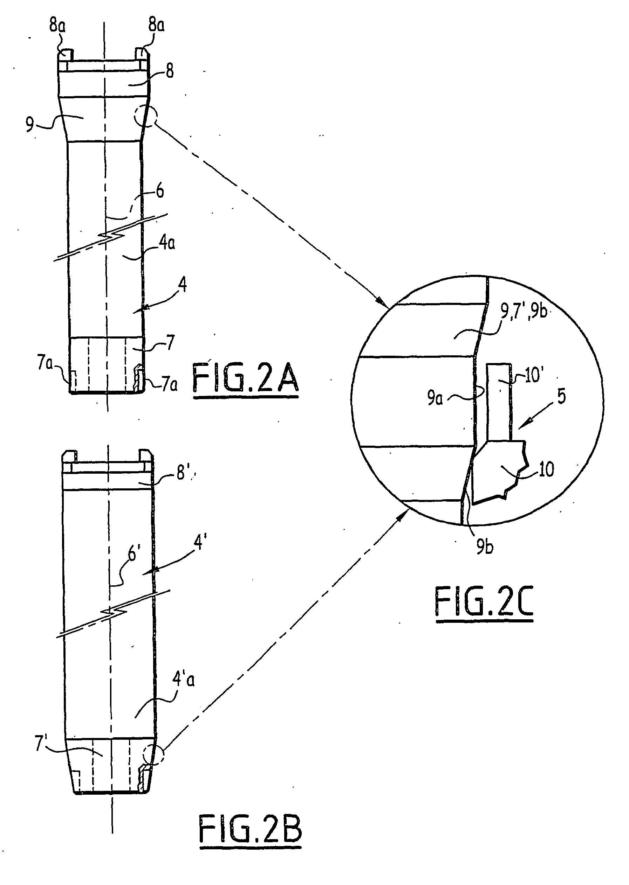

Sur la figure 2A, on a représenté un faux assemblage de combustible 4 pouvant assurer la remise en place de la partie supérieure de l'assemblage de combustible 5 situé en C13, de manière à libérer le passage d'un assemblage de combustible de remplacement en partie supérieure de l'emplacement 3 en C14.

Le faux assemblage qui a pour fonction le recalage des assemblages de combustible voisins de l'emplacement de rechargement sera désigné par la suite comme outil de recalage des assemblages de combustible (ORAC).

Le faux assemblage 4 ou ORAC présente la forme générale prismatique droite d'un emplacement 3 pour la dépose d'un assemblage de combustible dans le coeur. Le corps central 4a de l'ORAC 4 est une enveloppe en tôle métallique ayant des faces latérales planes disposées suivant les faces d'un prisme droit à section carrée, c'est-à-dire d'un parallélépipède à section carrée. On a également représenté l'axe 6 de l'enveloppe prismatique droite qui est reliée à sa partie inférieure à un faux embout inférieur 7 ayant une section carrée et des ouvertures 7a d'engagement de deux pions de positionnement verticaux en saillie sur la face supérieure de la plaque de support de coeur, au niveau de l'emplacement de chargement.

Le corps central 4a et l'embout inférieur 7 de l'ORAC ont une section transversale dont le côté est légèrement inférieur au côté de la section carrée de l'embout inférieur ou d'une grille-entretoise d'un assemblage combustible 5 du coeur de dimension standard.

L'ORAC 4 comporte de plus un embout supérieur 8 qui est identique à l'embout supérieur d'un assemblage de combustible 5 standard du coeur 1 du réacteur nucléaire.

L'embout 8 comporte en particulier des parties de préhension 8a permettant la préhension de l'embout supérieur 8 par le grappin de la machine de chargement du réacteur nucléaire représenté sur la figure 9 et qui sera décrit par la suite.

L'èmbout supérieur 8 de l'ORAC est relié au corps central 4a par une enveloppe 9 de forme pyramidale dont les faces latérales sont légèrement inclinées par rapport à l'axe 6 de l'ORAC.

Comme il est visible sur la figure 2C, les faces inclinées de la partie de liaison 9 de l'ORAC généralement plane comportent des parties successives 9a sensiblement parallèles à l'axe 6 de l'ORAC et 9b inclinées par rapport à l'axe 6 d'un angle faible de l'ordre de 0,5 à 6° et de préférence de 1 à 3,5° environ.

L'ORAC 4 qui est utilisé dans une première phase du procédé de rechargement d'un assemblage de combustible est pris en charge par le grappin de manutention de la machine de chargement du réacteur nucléaire pour être déplacé jusqu'à la verticale de l'emplacement de rechargement, c'est-à-dire dans le cas envisagé à la verticale de l'emplacement C14. Le poids de l'ORAC n'est pas supérieur au poids d'un assemblage de combustible dans lequel est engagé une grappe de réglage de réactivité. L'ORAC suspendu au grappin dans une position verticale, c'est-à-dire avec son axe 6 vertical, est descendu en direction de l'emplacement C14 dans lequel l'assemblage 5 situé en C13 est légèrement en déport. La section de l'embout inférieur 7 de l'ORAC 4, inférieure à la section maximale d'un assemblage de combustible, c'est-à-dire à la section d'un emplacement 3, permet une introduction facilitée de la partie inférieure de l'ORAC 4. Pendant l'introduction de l'ORAC dans l'emplacement de chargement 3 en position C14, les parois latérales lisses de l'embout inférieur 7, puis du corps central 4a peuvent venir en contact avec la partie supérieure de l'assemblage de combustible voisin 5 dans la position 13 qui est en déport à l'intérieur de l'emplacement 3 en position C14. Le fait que l'ORAC comporte des parois latérales lisses permet son introduction sans risque d'accrochage sur des assemblages voisins et, dans le cas décrit, sur l'assemblage 5 en position C13.

Dans le cas où l'on introduit un assemblage de combustible pour son chargement directement dans un emplacement entre des assemblages de combustible voisins, les embouts et surtout les grilles de l'assemblage de combustible en saillie sur les faces latérales de l'assemblage de combustible risquent de venir s'accrocher sur des éléments des assemblages de combustible voisins.

En fin d'introduction de l'ORAC à l'intérieur de l'emplacement 3, la partie intermédiaire 9 de l'ORAC présentant des faces inclinées par rapport à l'axe 6 vient en contact avec la partie supérieure de l'assemblage de combustible 5 dans la position C13 qui est en déport à l'intérieur de l'emplacement de chargement 3.

Sur la figure 2C, on a représenté un tronçon de la paroi latérale de la partie intermédiaire 9 de l'ORAC venant en contact avec l'embout supérieur 10 de l'assemblage de combustible 5 dans la position C13.

L'inclinaison de la paroi latérale de la partie intermédiaire 9 par rapport à l'axe 6 de l'ORAC suivant lequel on réalise le déplacement dans la direction verticale n'est pas constante, de sorte que cette paroi inclinée vient en contact avec le bord de l'embout supérieur 10 de l'assemblage de combustible 5 par ses parties inclinées 9b et produit ainsi, lors de son déplacement vers le bas, un déplacement de l'embout supérieur 10 de l'assemblage 5 voisin dans la direction opposée à l'emplacement de chargement, c'est-à-dire en fait un certain redressement de l'assemblage de combustible par rapport à son axe longitudinal théorique.

Sur la figure 2C, on a représenté une partie de bord latéral de l'embout supérieur 10 de l'assemblage voisin 5 sur lequel sont fixés des ressorts à lame 10' fixés le long d'un côté de l'embout 10.

La présence des tronçons 9a de la surface latérale de la partie intermédiaire 9 de l'ORAC ayant la forme de surfaces planes sensiblement parallèles à l'axe 6 de l'ORAC, entre deux parties inclinées 9b successives, permet d'éviter que les ressorts 10' ne viennent en contact avec la paroi inclinée de la partie intermédiaire 9 lors de son déplacement vers le bas. En cas de contact avec les ressorts 10', la paroi latérale de la partie intermédiaire 9 de l'ORAC en cours de déplacement vers le bas risquerait de déformer et de détériorer les ressorts 10'. La présence de parties inclinées et de parties parallèles à l'axe de déplacement de l'ORAC sur la surface latérale de la partie intermédiaire 9 permet de redresser l'assemblage de combustible voisin 5 pour l'éloigner de l'emplacement de chargement 3 par paliers successifs, les ressorts 10' de l'embout supérieur de l'assemblage voisin 5 restant toujours éloignés de la surface latérale de la partie intermédiaire 9 de l'ORAC.

Lorsque l'ORAC a été totalement inséré dans l'emplacement de chargement 3 de l'assemblage de combustible en position C14, suivant sensiblement toute la hauteur de l'emplacement, les ouvertures 7a de l'embout inférieur 7 sont venues en engagement sur les pions de positionnement de l'emplacement d'assemblages de combustible et l'assemblage voisin en position C13 est totalement replacé de manière à libérer complètement la partie supérieure de l'emplacement de chargement.

Sur la figure 2B, on a représenté un mode de réalisation différent du faux assemblage ou ORAC 4', cette forme de réalisation de l'ORAC permettant un redressement et un recalage du ou des assemblages de combustible voisins de l'emplacement de chargement sur toute leur hauteur.

L'ORAC 4' selon la variante de réalisation constitue un faux assemblage à parois latérales lisses dont la section transversale présente la dimension maximale de la section transversale d'un assemblage de combustible, c'est-à-dire la dimension de l'embout supérieur 8' et des grilles-entretoises de l'assemblage de combustible.

L'embout inférieur 7' de l'ORAC présente une surface latérale de forme pyramidale, les faces latérales de l'embout 7' étant inclinées par rapport à l'axe 6' de l'ORAC de manière que la section de l'embout soit croissante depuis une section de dimension inférieure à la section maximale de l'assemblage de combustible et de l'emplacement 3 de chargement jusqu'à une section égale à la section maximale de l'assemblage de combustible correspondant également à la section de l'embout supérieur 8'.

De plus, les surfaces latérales de l'embout inférieur 7' de l'ORAC présentent une forme telle que représentée sur la figure 4 et décrite plus haut, en ce qui concerne les parois latérales de la partie intermédiaire 9. Les parois latérales de l'embout 7' inclinées de manière générale par rapport à l'axe 6' de l'ORAC présentent des parties inclinées analogues aux parties 9b des surfaces latérales de la partie intermédiaire 9 et des parties sensiblement parallèles à l'axe 6' analogues aux tronçons 9a des faces inclinées de la partie intermédiaire 9. On évite ainsi une mise en contact des surfaces latérales de l'embout 7' avec les ressorts 10' de l'embout supérieur de l'assemblage voisin 5 en position C13, lors de l'engagement de l'ORAC à l'intérieur de l'emplacement de chargement 3 en position C14.

L'embout 7' est facilement introduit à l'intérieur de la partie supérieure de l'emplacement 3 en position C13, du fait de sa section réduite et le déplacement vers le bas de l'ORAC dans la direction de son axe 6' produit un redressement progressif de l'assemblage 5 en position C13. Les parois lisses de l'ORAC permettent, comme précédemment, une introduction de l'ORAC sans risque d'accrochage sur le ou les assemblages voisins de l'emplacement de chargement 3 en position C14.

Sur les figures 3A et 3B et 4A et 4B, on a représenté deux variantes de réalisation d'un embout inférieur 7 (ou 7') d'un ORAC permettant de faire reposer et de maintenir de manière parfaitement stable, l'ORAC 4 sur la plaque de support du coeur du réacteur nucléaire.

Suivant chacun des emplacements 3 pour un assemblage de combustible, la plaque de support de coeur comporte, comme indiqué plus haut, suivant une première diagonale de l'emplacement, deux pions de positionnement en saillie vers le haut et des ouvertures traversantes de passage d'eau de grand diamètre ou trous d'eau, disposées en particulier suivant une seconde diagonale de l'emplacement 3 perpendiculaire à la première diagonale.

Suivant une première variante de réalisation de l'ORAC représentée sur les figures 3A et 3B, l'embout inférieur 7 (ou 7') comportant les ouvertures d'engagement 7a des pions de positionnement suivant deux angles comporte également deux plots 26 disposés suivant une seconde diagonale de l'embout en saillie dans la direction axiale en-dessous de la face inférieure de l'embout, dont le diamètre est sensiblement égal ou légèrement inférieur au diamètre d'un trou d'eau de la plaque de support du coeur.

Suivant une seconde variante de réalisation représentée sur les figures 4A et 4B, l'embout inférieur de l'ORAC à section carrée présente des dimensions réduites par rapport à l'embout représenté sur les figures 3A et 3B de telle sorte qu'il puisse venir reposer sur la plaque de support de coeur entre les pions de positionnement d'un emplacement 3 d'assemblage de combustible, sans interférer avec les pions de positionnement ; dans ce cas, l'embout inférieur 7 de l'ORAC ne comporte que des plots 26' de grand diamètre en saillie sous sa face inférieure pour leur engagement dans des trous d'eau et ne présente pas d'ouvertures telles que 7a pour le passage des pions de positionnement.

Dans tous les cas, les plots 26 ou 26' engagés dans des trous d'eau de la plaque de support de coeur permettent d'obtenir une mise en place très stable de l'ORAC dans le coeur du réacteur nucléaire.

Lorsqu'on a mis en place l'ORAC, le ou les assemblages voisins de l'emplacement de chargement sont recalés dans des dispositions laissant l'accès complet à l'emplacement de chargement.

Toutefois, le ou les assemblages voisins de l'emplacement de chargement doivent être maintenus, au moins dans leur partie supérieure, dans leur position recalée, indépendamment de l'ORAC, pour permettre le chargement ultérieur d'un assemblage de combustible dans l'emplacement de chargement.

On peut utiliser, pour assurer le maintien des assemblages de combustible voisins de l'emplacement de chargement, un ou plusieurs outils tels que représentés sur les figures 5, 6A, 6B et 7. L'outil de maintien des assemblages de combustible (OMAC) désigné de manière générale par le repère 11 comporte une plaque de support 12 de forme carrée dont la section correspond à la section de quatre emplacements garnis d'assemblages de combustible 5, un dispositif de suspension et de maintien 13 solidaire d'une surface supérieure de la plaque 12 et des pions de positionnement et de maintien 14 fixés en saillie sous la plaque 12, à l'opposé du dispositif de suspension et de maintien 13.

Le dispositif de suspension et de maintien 13 est analogue à un embout supérieur d'assemblage de combustible qui peut être pris en charge par le grappin de la machine de chargement du combustible représentée sur la figure 9.

Le dispositif de suspension et de maintien 13 comporte un cadre carré analogue à la partie d'extrémité supérieure d'un embout d'assemblage de combustible comportant, dans deux angles en diagonale, des trous de positionnement 13a, 13b et, dans un troisième angle suivant une seconde diagonale, un trou 13c pour l'engagement d'un doigt du grappin de la machine de chargement constituant un élément de détrompage. En effet, le grappin de la machine de chargement doit toujours être placé dans la même orientation par rapport à l'OMAC qui doit lui-même être placé dans une orientation fixe au-dessus de quatre assemblages de combustible voisins mis en place dans le coeur du réacteur nucléaire.

Comme il est visible sur la figure 9, le grappin de manutention d'assemblages de combustible utilisé pour la manutention de l'OMAC 11 et désigné de manière générale par le repère 15 comporte un support 16 sur lequel est monté le doigt détrompeur 17 et quatre doigts de préhension 18 montés pivotants autour d'un axe 18a orthogonal à l'axe 19 du dispositif de manutention, sur le support 16 solidaire d'un mât 20 de la machine de chargement.

Un tube d'actionnement 21 monté coulissant à l'intérieur du mât 20 de la machine de chargement permet de déplacer les doigts 18 entre une position sortie représentée en traits pleins sur la figure 9 et une position rentrée représentée en traits mixtes pour l'un des doigts 18.

Le grappin 15 avec les doigts 18 en position rentrée est introduit dans l'espace interne du cadre carré du dispositif de suspension 13 de l'OMAC 11 puis les doigts sont manoeuvrés en position sortie par l'intermédiaire du tube d'actionnement 21.

Il est à remarquer que dans leur position rentrée et dans leur position sortie, les doigts 18 sont en appui sur des butées respectives 25a et 25b.

Les doigts 18 du grappin viennent en appui sous le cadre du dispositif de suspension 13 de l'OMAC, dans des zones médianes des quatre côtés du cadre du dispositif de suspension 13. La position en orientation de l'OMAC sous le grappin est déterminée par le doigt de détrompage 17 introduit dans le trou détrompeur 13c du dispositif de suspension 13.

Les pions d'engagement et de maintien de l'OMAC comportent, comme il est visible sur les figures 5, 6A et 7, quatre pions longs 14a visibles en particulier sur la figure 6A et quatre pions courts 14b dont deux sont visibles sur la figure 7.

Sur la figure 5, on a représenté dans le plan de la plaque 12, les directions des plans axiaux de la cuve à 90°-270° et 0°-180°, comme représenté sur la figure 1 et sur la figure 12, lorsque l'OMAC est en position de service au-dessus d'assemblages du coeur du réacteur nucléaire.

Les pions longs 14a de l'OMAC sont disposés dans des angles de sections d'assemblages de combustible et de manière adjacente et de part et d'autre du plan axial 90°-270° de la cuve et du coeur du réacteur.

Les pions courts sont placés de manière diagonalement opposée aux pions longs dans chacune des sections d'assemblages de combustible sur lesquels on vient placer l'OMAC.

Lorsque l'OMAC est mis en place au-dessus de quatre assemblages de combustible, par exemple au-dessus des assemblages de combustible dans les emplacements C12, C13, B12 et B13 représentés sur la figure 12, l'OMAC présente, pour chacun des assemblages de combustible, un pion long et un pion court, dans des positions en diagonale.

Comme il est visible en particulier sur la figure 6B, les pions longs 14a comportent un fût et une partie d'extrémité inférieure à diamètre réduit terminée par un pointeau de positionnement 22 dont l'axe 22a est décalé dans une direction axiale du coeur par rapport à l'axe 14'a du fût du pion long.

Le décalage entre l'axe 22a du pointeau de positionnement 22 et l'axe 14'a du fût d'un doigt long 14a peut être par exemple de 5 mm suivant une direction qui peut être la direction horizontale de l'OMAC destinée à être placée suivant la direction axiale 90°-270° du coeur du réacteur nucléaire dans lequel on effectue le chargement.

Le décalage entre l'axe du pointeau de positionnement 22 et l'axe du fût du pion long pourrait être prévu également dans la direction 0°-180° du coeur et de la cuve du réacteur nucléaire, dans un sens ou dans l'autre.

L'orientation du décalage de l'axe des pointeaux de positionnement des doigts longs de l'OMAC est choisie en fonction du décalage observé sur la position du ou des assemblages voisins de l'emplacement de chargement, de manière à assurer un centrage et une mise en place facilités des doigts longs de l'OMAC au moment de sa mise en place au-dessus de quatre assemblagés de combustible, dans des positions telles que représentées en B12, B13, C12 et C13 sur la figure 12.

L'OMAC pris en charge par le grappin de manutention de la machine de chargement est placé au-dessus des assemblages dans les positions B12, B13, C12, C13 et descendu, comme représenté sur la figure 10A, de manière que, pour chacun des assemblages de combustible 5 dans les positions B12, B13, C12, C13, le pointeau de positionnement 22 d'un doigt long correspondant 14a vienne au-dessus d'un trou de positionnement 24a de l'embout supérieur 10 de l'assemblage de combustible 5.

En faisant descendre l'OMAC dans la direction verticale, les pointeaux 22 des doigts longs 14a de l'OMAC assurent une remise en position des embouts des assemblages de combustible, par coopération des trous 24a, 24b des embouts des assemblages de combustible avec une rampe inclinée 22a du pointeau 22, dans une direction assurant un centrage par rapport aux axes des doigts de positionnement 14a et 14b des trous 24a et 24b dans lesquels ces doigts de positionnement sont engagés.

Comme il est visible sur la figure 10C, les doigts 14a et 14b en position centrée sont alors engagés dans les trous de positionnement correspondants 24a et 24b de l'embout supérieur 10 de l'assemblage de combustible représenté. Les doigts 14a et 14b de positionnement des trois autres assemblages de combustible sont engagés simultanément dans les trous de positionnement des embouts supérieurs de ces assemblages de combustible.

L'engagement pratiquement sans jeu des doigts 14a et 14b dans les trous de positionnement 24a et 24b des embouts supérieurs d'assemblages de combustible assure le maintien relatif des quatre embouts supérieurs des assemblages de combustible dans les positions B12, B13, C12, C13 et en particulier un maintien de l'embout et de la partie supérieure de l'assemblage de combustible dans la position C13 voisine de la position de chargement C14. On peut alors enlever l'ORAC de l'emplacement de chargement 3 dans la position C14, sans que l'embout et la partie supérieure de l'assemblage de combustible 5 en position C13 ne se déplace à nouveau en direction de l'emplacement de chargement.

On peut alors effectuer le chargement d'un assemblage de combustible à l'emplacement de chargement C14, l'assemblage de combustible voisin en position C13 ne se trouvant plus en déport, à sa partie supérieure, à l'intérieur de l'emplacement C14.

Dans le cas du chargement d'un assemblage à l'emplacement C14 comme représenté sur la figure 12, un seul dispositif OMAC 11 placé sur quatre assemblages de combustible permet de recaler l'assemblage de combustible voisin en position C13, les autres faces de l'assemblage de combustible à charger venant en contact avec le cloisonnement ou en vis-à-vis d'un emplacement vide d'assemblage de combustible.

Dans d'autres cas, l'emplacement de chargement sera entouré par au moins deux assemblages de combustible voisins et qui peuvent être déportés vers l'intérieur de l'emplacement de chargement. Dans ce cas, on pourra utiliser deux OMAC ou plus, de manière à assurer le maintien des assemblages de combustible voisins entourant l'emplacement de chargement, après leur recalage par mise en place de l'ORAC.

On pourra utiliser, par exemple, jusqu'à quatre dispositifs OMAC 11 tels que représentés sur les figures 5 à 7 pour assurer le maintien de quatre assemblages de combustible entourant un emplacement de chargement, dans le cas où l'on insert un assemblage de combustible à l'intérieur du coeur, par exemple en fin de chargement ou après chargement.

Comme il est visible sur la figure 11, on peut utiliser un dispositif OMAC 11' réalisé suivant une variante et destiné à assurer le maintien de trois assemblages de combustible entourant un emplacement de chargement. Dans ce cas, il peut être possible d'utiliser uniquement deux dispositifs OMAC 11' placés sur deux ensembles de trois assemblages de combustible entourant un emplacement de chargement à l'intérieur du coeur.

Un dispositif OMAC tel que représenté sur la figure 11 comporte six pions de centrage 14' dont trois pions long et trois pions courts.

Comme il a été expliqué plus haut, le dispositif OMAC doit être fixé à la machine de chargement de manière que ses deux axes horizontaux soient placés respectivement suivant les plans axiaux du coeur et de la cuve du réacteur, à 0°-180° et 90°-270°.

Suivant le sens du décalage des trous de positionnement des embouts supérieurs des assemblages de combustible sur lesquels on place l'OMAC, il faudra donc choisir l'un de quatre outils OMAC comportant des doigts longs dont les pointeaux de positionnement sont décalés dans l'une des directions 25a, 25b, 25c et 25d représentées sur la figure 5. On doit donc disposer d'outils OMAC appropriés pour chacun des sens de recalage des assemblages de combustible, au moment de la mise en place de l'ORAC.

Comme il est visible sur la figure 8, on peut cependant envisager la réalisation d'un outil OMAC comportant des doigts longs 14a fixés sur la plaque 12 de l'OMAC de manière à pouvoir être orientés autour de leur axe 14'a et fixés dans une orientation voulue en fonction du sens de recalage des assemblages de combustible. On peut par exemple réaliser la partie supérieure du fourreau du doigt long sous la forme d'une tige filetée qui est engagée dans une ouverture de la plaque 12 et bloquée par un écrou de fixation.

Après le chargement de l'assemblage de combustible on enlève et on évacue hors de la piscine le ou les OMAC.

Le procédé et le dispositif suivant l'invention peuvent être adaptés au cas du chargement d'assemblages de combustible de forme prismatique droite ayant une section transversale différente d'un carré et placés dans des emplacements de forme correspondante, dans une disposition en réseau d'un type quelconque.

## Revendications

1. Procédé de chargement d'un assemblage de combustible (5) dans un emplacement de chargement (3) du coeur (1) d'un réacteur nucléaire constitué par des assemblages de combustible (5) de forme générale prismatique droite disposés à l'intérieur d'un cloisonnement (2), dans des emplacements (3) adjacents prismatiques droits à axes verticaux, dont les sections transversales dans un plan horizontal constituent un réseau régulier, l'emplacement de chargement (3) de l'assemblage de combustible (5) comportant au moins une face latérale verticale suivant laquelle est disposée une face latérale d'un assemblage de combustible voisin de l'assemblage de combustible (5) dont on effectue le chargement, **caractérisé par le fait :**
- **qu'**on introduit, dans l'emplacement de chargement (3), un faux assemblage (4) ayant sensiblement la forme et les dimensions de l'emplacement de chargement (3) et comportant des parois latérales lisses substantiellement suivant toute la hauteur de l'emplacement de chargement (3),
- **qu'**on fixe la position de l'au moins un assemblage voisin (5) en présence du faux assemblage (4), par rapport à au moins un second assemblage (5) du coeur (1), au moins dans la partie supérieure de l'assemblage voisin (5),
- **qu'**on enlève le faux assemblage de l'emplacement de chargement (3), et
- **qu'**on introduit l'assemblage de combustible (5) dont on effectue le chargement à l'intérieur de l'emplacement de chargement (3).

2. Dispositif de chargement d'un assemblage de combustible (5) dans un emplacement de chargement (3) du coeur (1) d'un réacteur nucléaire constitué par des assemblages de combustible (5) de forme générale prismatique droite disposés à l'intérieur d'un cloisonnement (2), dans des emplacements (3) adjacents prismatiques droits à axes verticaux dont les sections transversales dans un plan horizontal constituent un réseau régulier, l'emplacement de chargement (3) de l'assemblage de combustible comportant au moins une face latérale verticale suivant laquelle est disposée une face latérale d'un assemblage de combustible (5) voisin de l'assemblage de combustible dont on effectue le chargement, **caractérisé par le fait qu'**il comporte un outil de recalage des assemblages de combustible (4) sous la forme d'un faux assemblage ayant la forme générale prismatique droite d'un emplacement (3) d'assemblage de combustible (5) dans le coeur et délimité latéralement par des parois lisses, et
- au moins un outil de maintien des assemblages de combustible (11) comportant une plaque support (12) et des pions de positionnement (14) destinés à être engagés dans des ouvertures de positionnement d'embouts supérieurs (10) d'assemblages de combustible du coeur,
- ainsi qu'au moins un moyen de manutention (15) pour la préhension et la manutention de l'outil de recalage des assemblages combustibles (4) et de l'au moins un outil de maintien des assemblages de combustible (11), par l'intermédiaire d'un moyen de suspension et de maintien (8, 13).

3. Dispositif suivant la revendication 2, **caractérisé par le fait que** le moyen de suspension et de maintien (8, 13) de l'outil de recalage des assemblages de combustible (4) et de l'outil de maintien des assemblages de combustible (11) est analogue à une partie de suspension et de maintien d'un embout supérieur (10) d'un assemblage de combustible (5) du coeur et que le dispositif de manutention de l'outil de recalage des assemblages de combustible (4) et de l'outil de maintien des assemblages de combustible (11) est un grappin (15) d'une machine de chargement du réacteur nucléaire.

4. Dispositif suivant l'une quelconque des revendications 2 et 3, **caractérisé par le fait que** l'outil de recalage des assemblages de combustible (4) comporte un corps central (4a, 4'a), un embout supérieur (8, 8') et un embout inférieur (7, 7') ayant un axe longitudinal commun (6, 6') et une section transversale dans un plan perpendiculaire à l'axe (6, 6') ayant la forme de la section transversale d'un emplacement (3) d'un assemblage de combustible dans le coeur du réacteur nucléaire.

5. Dispositif suivant la revendication 4, **caractérisé par le fait que** le corps central (4a) et l'embout inférieur (7) de l'outil de recalage des assemblages de combustible (4) de forme prismatique droite présentent une section transversale ayant des dimensions inférieures aux dimensions de la section transversale d'un emplacement d'assemblages de combustible dans le coeur, un embout supérieur (8) dont la section transversale a les dimensions de la section transversale d'un emplacement d'assemblage de combustible (5) dans le coeur (1) du réacteur et une partie intermédiaire (9) entre le corps central et l'embout supérieur (8) délimitée par des parois latérales inclinées par rapport à l'axe (6) de l'outil de recalage des assemblages de combustible qui présente une section transversale de dimension généralement croissante entre le corps central (4a) et l'embout supérieur (8).

6. Dispositif suivant la revendication 4, **caractérisé par le fait que** l'outil de recalage des assemblages de combustible (4') comporte un corps central (4'a) de forme prismatique droite dont la section transversale a les dimensions de la section transversale d'un emplacement (3) d'un assemblage de combustible (5) dans le coeur (1) du réacteur et un embout inférieur (7) ayant des parois latérales inclinées par rapport à l'axe (6') de l'outil de recalage des assemblages de combustible, de manière que la section transversale de l'embout inférieur (7') soit de dimension décroissante entre le corps central (4'a) et son extrémité inférieure d'engagement dans un emplacement (3) du coeur (1) du réacteur nucléaire.

7. Dispositif suivant l'une quelconque des revendications 4, 5 et 6, **caractérisé par le fait que** l'embout inférieur (7, 7') de l'outil de recalage (4) comporte des ouvertures latérales (7a) de passage de pions de positionnement d'un emplacement (3) du coeur (1) du réacteur et deux plots (26) d'engagement dans des trous d'eau de l'emplacement (3), lors de la mise en place de l'outil de recalage (4) sur la plaque de support du coeur (1) du réacteur.

8. Dispositif suivant l'une quelconque des revendications 4, 5 et 6, **caractérisé par le fait que** l'embout inférieur (7) de l'outil de recalage (4) présente une section telle qu'il puisse être engagé entre les pions de positionnement d'un emplacement d'un assemblage de combustible du coeur (1) du réacteur et deux plots (26') d'engagement dans des trous d'eau de l'emplacement (3), lors de la mise en place de l'outil de recalage (4) sur la plaque de support du coeur (1) du réacteur.

9. Dispositif suivant l'une quelconque des revendications 5 à 8, **caractérisé par le fait que** les parois inclinées par rapport à l'axe (6, 6') de la partie intermédiaire (9) ou de l'embout inférieur (7') de l'outil de recalage des assemblages de combustible (4, 4') présentent des portions successives (9a, 9b), suivant la direction de l'axe (6, 6'), inclinées par rapport à l'axe (6, 6') et sensiblement parallèles à l'axe (6, 6').

10. Dispositif suivant l'une quelconque des revendications 3 à 9, **caractérisé par le fait que** l'outil de maintien des assemblages de combustible (11) comporte une plaque support (12, un premier ensemble de doigts de positionnement (14a) et un second ensemble de doigts de positionnement (14b) parallèles entre eux et fixés dans des dispositions perpendiculaires à la plaque support (12) les doigts de positionnement (14b) du second ensemble ayant une longueur dans la direction perpendiculaire à la plaque support (12) inférieure à la longueur des doigts (14a) du premier ensemble.

11. Dispositif suivant la revendication 10, **caractérisé par le fait que** les doigts de positionnement (14a) du premier ensemble ou doigts longs comportent un fût ayant un premier axe longitudinal (14'a) et un pointeau d'extrémité (22) dans le prolongement du fût ayant un axe longitudinal (22a) décalé par rapport à l'axe (14'a) du fût, dans une direction perpendiculaire à l'axe du fût (14'a).

12. Dispositif suivant la revendication 11, **caractérisé par le fait que** les doigts longs (14a) de l'outil de maintien des assemblages de combustible (11) sont fixés sur la plaque de support (12) par des moyens de fixation mécaniques permettant de régler l'orientation du doigt (14a) autour de son axe longitudinal (14'a) et ainsi, la direction du décalage entre les axes (14'a) du fût du doigt et (22a) du pointeau d'extrémité du doigt long (14a).

13. Dispositif suivant l'une quelconque des revendications 10 à 12 pour le chargement d'assemblages de combustible à section transversale carrée, dans des emplacements prismatiques droits à section carrée du coeur (1) d'un réacteur nucléaire, **caractérisé par le fait que** l'outil de maintien des assemblages de combustible (11) comporte une plaque de support (12) ayant la forme d'un carré dont le côté est sensiblement égal à deux fois le côté de la section transversale d'un emplacement (3) d'assemblage de combustible (5) dans le coeur (1) du réacteur nucléaire, quatre doigts longs (14a) dans des positions de trous de positionnement de quatre assemblages de combustible (5) voisins dans le coeur (1) du réacteur nucléaire et quatre doigts courts (14b) de longueur inférieure à la longueur des doigts longs dans une direction perpendiculaire à la plaque support (12) dans des positions correspondant aux positions en section transversale de quatre trous de positionnement des quatre assemblages de combustible voisins situés en diagonale sur chacun des embouts supérieurs d'assemblages de combustible (5) par rapport aux trous de positionnement dans les positions des doigts longs (14a).

14. Dispositif suivant l'une quelconque des revendications 10 à 12, dans le cas d'un coeur (1) d'un réacteur nucléaire constitué par des assemblages de combustible (5) ayant une section transversale carrée disposés dans des emplacements (3) du coeur de forme prismatique droite ayant des sections transversales carrées disposées suivant un réseau à maille carrée, **caractérisé par le fait que** l'outil de maintien des assemblages de combustible (11') comporte une plaque support (12') en forme d'équerre ayant des dimensions correspondant aux dimensions des sections transversales de trois emplacements d'assemblages de combustible (5) voisins dans le coeur (1), trois pions longs et trois pions courts destinés à être engagées respectivement dans des ouvertures de positionnement de trois assemblages de combustible voisins disposés en équerre dans le coeur (1) du réacteur nucléaire, les pions longs étant introduits dans des premières ouvertures de chacun des assemblages de combustible et les trois pions courts, respectivement, dans trois secondes ouvertures de positionnement des trois assemblages de combustible disposés en équerre situées en diagonale par rapport aux premières ouvertures de réception des pions longs.

15. Dispositif suivant l'une quelconque des revendications 10 à 14, **caractérisé par le fait que** l'outil de maintien des assemblages de combustible (11, 11') comporte un dispositif de suspension et de maintien (13) analogue à un dispositif de suspension et de maintien d'un embout supérieur (10) d'un assemblage de combustible (5) solidaire de la plaque support (12) sur une face de la plaque de support (12) opposée à une face de la plaque support (12) sur lequel sont fixés en saillie les pions de positionnement (14a, 14b).

## Claims

1. A method for loading a fuel assembly (5) into a loading location (3) in the core (1) of a nuclear reactor comprising fuel assemblies (5) of generally right prismatic shape located within an enclosing wall (2) in adjacent right prismatic locations (3) having vertical axes, the transverse cross-sections of which in a horizontal plane form a regular arrangement, the loading location (3) for the fuel assembly (5) comprising at least one vertical lateral surface according to which a lateral surface of a fuel assembly adjacent to the fuel assembly (5) being loaded is positioned, **characterised in that**:
- a dummy assembly (4) having substantially the shape and dimensions of the loading location (3) and having smooth lateral walls substantially over the entire height of the loading location (3) is inserted into the loading location (3),
- the position of the at least one adjacent assembly (5) is fixed in the presence of the dummy assembly (4) with respect to at least a second assembly (5) in the core (1), at least in the upper part of the adjacent assembly (5),
- the dummy assembly is removed from the loading location (3), and
- the fuel assembly (5) which is being loaded is inserted into the loading location (3).

2. A device for loading a fuel assembly (5) into a loading location (3) in the core (1) of a nuclear reactor comprising fuel assemblies (5) of general right prismatic shape located within an enclosing wall (2) in adjacent right prismatic locations (3) having vertical axes whose transverse cross-sections in a horizontal plane constitute a regular arrangement, the loading location (3) for the fuel assembly comprising at least one vertical lateral surface according to which a lateral surface of a fuel assembly (5) adjacent to the fuel assembly being loaded is positioned, **characterised in that** it comprises a fuel assembly realignment tool (4) in the form of a dummy assembly having the general right prismatic shape of a location (3) for a fuel assembly (5) in the core and laterally bounded by smooth walls, and
- at least one fuel assembly holding tool (11) comprising a supporting plate (12) and positioning pins (14) configured to engage the positioning openings of upper end members (10) of fuel assemblies in the core,
- as well as at least one handling means (15) for gripping and handling the fuel assembly realignment tool (4) and the at least one fuel assembly holding tool (11) through suspension and holding means (8, 13).

3. A device according to claim 2, **characterised in that** the suspension and holding means (8, 13) of the fuel assembly realignment tool (4) and the fuel assembly holding tool (11) is similar to a suspension and holding part of an upper end member (10) of a fuel assembly (5) in the core and that the handling device of the fuel assembly realignment tool (4) and the fuel assembly holding tool (11) is a gripper (15) of a nuclear reactor loading machine.

4. A device according to either of claims 2 and 3, **characterised in that** the fuel assembly realignment tool (4) comprises a central body (4a, 4'a), an upper end member (8, 8') and a lower end member (7, 7') having a common longitudinal axis (6, 6') and a transverse cross-section in a plane perpendicular to the axis (6, 6') having the shape of the transverse cross-section of a location (3) for a fuel assembly in the core of the nuclear reactor.

5. A device according to claim 4, **characterised in that** the central body (4a) and the lower end member (7) of the fuel assembly realignment tool (4) of right prismatic shape have a transverse cross-section having dimensions which are smaller than the dimensions of the transverse cross-section of a location for fuel assemblies in the core, an upper end member (8) whose transverse cross-section has the dimensions of the transverse cross-section of a location for a fuel assembly (5) in the core (1) of the reactor and an intermediate part (9) between the central body and the upper end member (8) bounded by lateral walls which are inclined in relation to the axis (6) of the fuel assembly realignment tool which has a transverse cross-section of generally increasing dimensions between the central body (4a) and the upper end member (8).

6. A device according to claim 4, **characterised in that** the fuel assembly realignment tool (4') comprises a central body (4'a) of right prismatic shape whose transverse cross-section has the dimensions of the transverse cross-section of a location (3) for a fuel assembly (5) in the core (1) of the reactor and a lower end member (7) having lateral walls inclined in relation to the axis (6') of the fuel assembly realignment tool in such a way that the transverse cross-section of the lower end member (7') has decreasing dimensions between the central body (4'a) and its lower engaging extremity in a location (3) in the core (1) of the nuclear reactor.

7. A device according to any one of claims 4, 5 and 6, **characterised in that** the lower end member (7, 7') of the realignment tool (4) comprises lateral openings (7a) for the passage of positioning pins for a location (3) in the core (1) of the reactor and two posts (26) engaging in the water holes of the location (3) when the realignment tool (4) is positioned on the supporting plate for the core (1) of the reactor.

8. A device according to any one of claims 4, 5 and 6, **characterised in that** the lower end member (7) of the realignment tool (4) has a cross-section such that it can be engaged between the positioning pins of a location for a fuel assembly in the core (1) of the reactor and two posts (26') engaging in the water holes of the location (3) when the realignment tool (4) is positioned on the supporting plate for the core (1) of the reactor.

9. A device according to any one of claims 5 to 8, **characterised in that** the walls inclined with respect to the axis (6, 6') of the intermediate part (9) or the lower end member (7') of the fuel assembly realignment tool (4, 4') have successive portions (9a, 9b) in the direction of the axis (6, 6') which are inclined with respect to the axis (6, 6') and substantially parallel to the axis (6, 6').

10. A device according to any one of claims 3 to 9, **characterised in that** the fuel assembly holding tool (11) comprises a supporting plate (12), a first set of positioning fingers (14a) and a second set of positioning fingers (14b) which are parallel to each other and are fixed in arrangements perpendicular to the supporting plate (12), the positioning fingers (14b) of the second set having a length in the direction perpendicular to the supporting plate (12) which is shorter than the length of the fingers (14a) of the first set.

11. A device according to claim 10, **characterised in that** the positioning fingers (14a) of the first set or long fingers comprise a shank having a first longitudinal axis (14'a) and an extremity tip (22) in a prolongation of the shank having a longitudinal axis (22a) which is offset with respect to the axis (14'a) of the shank in a direction perpendicular to the axis of the shank (14'a).

12. A device according to claim 11, **characterised in that** the long fingers (14a) of the fuel assembly holding tool (11) are attached to the supporting plate (12) by mechanical fixing means through which the orientation of a finger (14a) about its longitudinal axis (14'a) and thus the direction of offset between the axis (14'a) of the shank of the finger and (22a) of the extremity tip of the long finger (14a) can be adjusted.

13. A device according to any one of claims 10 to 12 for loading fuel assemblies of square transverse cross-section in right prismatic locations of square cross-section in the core (1) of a nuclear reactor, **characterised in that** the fuel assembly holding tool (11) comprises a supporting plate (12) in the shape of a square whose side is substantially equal to twice the side of the transverse cross-section of one location (3) for a fuel assembly (5) in the core (1) of the nuclear reactor, four long fingers (14a) in the positions of positioning holes for four adjacent fuel assemblies (5) in the core (1) of the nuclear reactor and four short fingers (14b) of a length shorter than the length of the long fingers in a direction perpendicular to the supporting plate (12) in positions corresponding to the positions in transverse cross-section of four positioning holes for the four adjacent fuel assemblies located on a diagonal on each of the upper end members of the fuel assemblies (5) in relation to the positioning holes in the positions of the long fingers (14a).

14. A device according to any one of claims 10 to 12, in the case of a core (1) of a nuclear reactor comprising fuel assemblies (5) having a square transverse cross-section positioned in locations (3) in the core of right prismatic shape having square transverse cross-sections arranged in a square grid arrangement, **characterised in that** the fuel assembly holding tool (11') comprises a supporting plate (12') in the shape of a square having dimensions corresponding to the dimensions of the transverse cross-sections of three locations for adjacent fuel assemblies (5) in the core (1), three long pins and three short pins configured to engage respectively the positioning openings of three adjacent fuel assemblies arranged in a square in the core (1) of the nuclear reactor, the long pins being inserted in first openings of each of the fuel assemblies and the three short pins being inserted respectively in three second positioning openings for the three fuel assemblies arranged in a square located diagonally with respect to the first openings receiving the long pins.

15. A device according to any one of claims 10 to 14, **characterised in that** the fuel assembly holding tool (11, 11') comprises a suspension and holding device (13) similar to a suspension and holding device of an upper end member (10) of a fuel assembly (5) integral with the supporting plate (12) on one side of the supporting plate (12) opposite a side of the supporting plate (12) on which the positioning pins (14a, 14b) are fixed projectingly.

## Patentansprüche

1. Verfahren zum Laden eines Brennelements (5) in eine Ladestelle (3) eines Kerns (1) eines Kernreaktors, der aus Brennelementen (5) mit einer allgemeinen prismatischen geraden Form gebildet ist, die im Inneren einer Umfassung (2) in aneinandergrenzenden prismatischen geraden Stellen (3) mit vertikaler Achsen angeordnet sind, deren Querschnitte in einer horizontalen Ebene ein gleichmäßiges Gitter bilden, wobei die Ladestelle (3) des Brennelements (5) mindestens eine vertikale Seitenfläche aufweist, gemäß der eine Seitenfläche eines zu dem Brennelement (5), mit dem man das Laden durchführt, benachbarten Brennelements angeordnet ist, **gekennzeichnet durch** die Tatsache:
- dass man in die Ladestelle (3) ein Scheinelement (4) einführt, das im Wesentlichen die Form und die Abmessungen der Ladestelle (3) hat und glatte Seitenwände im Wesentlichen gemäß der gesamten Höhe der Ladestelle (3) umfasst,
- dass man die Position des mindestens einen benachbarten Elements (5) bei Vorhandensein des Scheinelements (4) in Bezug auf mindestens ein zweites Elements (5) des Kerns (1) mindestens in dem oberen Bereich des benachbarten Elements (5) festlegt,
- dass man das Scheinelement aus der Ladestelle (3) herausnimmt, und
- dass man das Brennelement (5), mit dem man das Laden durchführt, in das Innere der Ladestelle (3) einführt.

2. Vorrichtung zum Laden eines Brennelements (5) in eine Ladestelle (3) des Kerns (1) eines Kernreaktors, der aus Brennelementen (5) mit einer allgemein prismatischen geraden Form gebildet wird, die im Inneren einer Umfassung (5) in angrenzenden prismatischen geraden Stellen (3) vertikaler Achsen angeordnet sind, deren Querschnitte in einer horizontalen Ebene ein gleichmäßiges Gitter bilden, wobei die Ladestelle (3) des Brennelements mindestens eine vertikale Seitenfläche umfasst, gemäß der eine Seitenfläche eines Brennelements (5), benachbart zu dem Brennelement, mit dem man das Laden durchführt, angeordnet ist, **gekennzeichnet durch** die Tatsache, dass sie ein Werkzeug (4) zum Einstellen der Brennelemente in Form eines Scheinelements, das die allgemeine prismatisch gerade Form einer Stelle (3) des Brennelements (5) in dem Kern aufweist und seitlich **durch** glatte Wände begrenzt ist, und
- mindestens ein Werkzeug (11) zum Halten der Brennelemente, das eine Trägerplatte (12) und Positionierstifte (14) umfasst, die dazu dienen, in obere Positionieröffnungen von oberen Ansätzen (10) der Brennelemente des Kerns einzugreifen,
- sowie mindestens ein Handhabungsmittel (15) für das Greifen und Handhaben des Werkzeugs (4) zum Einstellen der Brennelemente und des mindestens einen Werkzeugs (11) zum Halten der Brennelemente (11) mittels eines Aufhänge- und Haltemittels (8, 13), umfasst.

3. Vorrichtung nach Anspruch 2, **gekennzeichnet durch** die Tatsache, dass das Aufhänge- und Haltemittel (8, 13) des Werkzeugs (4) zum Einstellen der Brennelemente und des Werkzeugs (11) zum Halten der Brennelemente analog zu einem Aufhänge- und Haltebereich eines oberen Ansatzes (10) eines Brennelements (5) des Kerns ist, und dass die Vorrichtung zur Handhabung des Werkzeugs (4) zum Einstellen der Brennelemente und des Werkzeugs (11) zum Halten der Brennelemente ein Greifer (15) einer Lademaschine des Kernreaktors ist.

4. Vorrichtung nach einem beliebigen der Ansprüche 2 und 3, **gekennzeichnet durch** die Tatsache, dass das Werkzeug (4) zum Einstellen der Brennelemente einen Mittelkörper (4a, 4'a), einen oberen Ansatz (8, 8') und einen unteren Ansatz (7, 7') aufweist, die eine gemeinsame Längsachse (6, 6') und einen Querschnitt in einer Ebene senkrecht zur Achse (6, 6') haben, der die Form des Querschnitts einer Stelle eines Brennelements in dem Kern des Kernreaktors hat.

5. Vorrichtung nach Anspruch 4, **gekennzeichnet durch** die Tatsache, dass der Mittelkörper (4a) und der untere Ansatz (7) des Werkzeugs (4) zum Einstellen der Brennelemente von gerader prismatischer Form einen Querschnitt aufweisen, der Abmessungen hat, die kleiner sind als die Abmessungen des Querschnitts einer Stelle der Brennelemente in dem Kern sind, wobei ein oberer Ansatz (8), dessen Querschnitt die Abmessungen des Querschnitts einer Stelle der Brennelemente (5) in dem Kern (1) des Reaktors hat und ein mittlerer Teil (9) zwischen dem Mittelkörper und dem oberen Ansatz (8), der **durch** Seitenwände begrenzt ist, die in Bezug auf die Achse (6) des Werkzeugs zum Einstellen der Brennelemente geneigt sind, das einen Querschnitt allgmeiner steigender Abmessung zwischen dem Mittelkörper (4a) und dem oberen Ansatz (8) aufweist.

6. Vorrichtung nach Anspruch 4, **gekennzeichnet durch** die Tatsache, dass das Werkzeug (4') zum Einstellen der Brennelemente einen Mittelkörper (4'a) in gerader prismatischer Form, dessen Querschnitt die Abmessungen des Querschnitts einer Stelle (3) eines Brennelements (5) in dem Kern (1) des Reaktors aufweist, und einen unteren Ansatz (7) umfasst, der Seitenwände aufweist, die in Bezug auf die Achse (6') des Werkstücks zum Einstellen der Brennelemente geneigt sind, derart, dass der Querschnitt des unteren Ansatzes (7') Abmessungen hat, die zwischen dem Mittelkörper (4'a) und seinem unteren Ende des Eingreifens in eine Stelle (3) des Kerns (1) des Kernreaktors abnehmen.

7. Vorrichtung nach einem beliebigen der Ansprüche 4, 5 und 6, **gekennzeichnet durch** die Tatsache, dass der untere Ansatz (7, 7') des Werkzeugs (4) zum Einstellen seitliche Öffnungen (7a) für den Durchgang der Positionierstifte einer Stelle (3) des Kerns (1) des Reaktors und zwei Stifte (26) für den Eingriff in Wasserlöcher der Stellen (3) bei der Instellungbringung des Werkzeugs (4) zum Einstellen auf der Trägerplatte des Kerns (1) des Reaktors umfasst.

8. Vorrichtung nach einem beliebigen der Ansprüche 4, 5 und 6, **gekennzeichnet durch** die Tatsache, dass der untere Ansatz (7) des Werkzeugs (4) zum Einstellen einen Querschnitt derart aufweist, dass er zwischen die Positionierstifte einer Stelle eines Brennelements des Kerns des Reaktors eingreifen kann und zwei Stifte (26') zum Eingreifen in Wasserlöcher der Stelle (3) bei der Instellungbringung des Werkzeugs (4) zum Einstellen auf der Trägerplatte des Kerns (1) des Reaktors aufweist.

9. Vorrichtung nach einem beliebigen der Ansprüche 5 bis 8, **gekennzeichnet durch** die Tatsache, dass die in Bezug auf die Achse (6, 6') des Zwischenteils (9) oder des unteren Ansatzes (7') des Werkzeugs (4, 4') zum Einstellen der Brennelemente geneigten Wände aufeinander folgende Bereiche (9a, 9b) aufweisen, die entsprechend der Richtung der Achse (6, 6') in Bezug auf die Achse (6, 6') geneigt und im Wesentlichen parallel zur Achse (6, 6') sind.

10. Vorrichtung nach einem beliebigen der Ansprüche 3 bis 9, **gekennzeichnet durch** die Tatsache, dass das Werkzeug (11) zum Halten der Brennelemente eine Trägerplatte (12), eine erste Anordnung von Positionierfingern (14a) und eine zweite Anordnung von Positionierfingern (14b) aufweist, die untereinander parallel sind und in senkrechter Ausrichtung zur Trägerplatte (12) befestigt sind, wobei die Positionierfinger (14b) der zweiten Anordnung in Richtung senkrecht zur Trägerplatte (12) eine Länge aufweisen, die kleiner als die Länge der Finger (14a) der ersten Anordnung ist.

11. Vorrichtung nach Anspruch 10, **gekennzeichnet durch** die Tatsache, dass die Positionierfinger (14a) der zweiten Anordnung oder die langen Finger einen Schaft, der eine erste Längsachse (14'a) hat und eine Spitze (22) am Ende in der Verlängerung des Schaftes, die eine Längsachse (22a) hat, die in Bezug auf die Achse (14'a) des Schaftes in eine Richtung senkrecht zur Achse des Schaftes (14'a) versetzt ist, umfassen.

12. Vorrichtung nach Anspruch 11, **gekennzeichnet durch** die Tatsache, dass die langen Finger (14a) des Werkzeugs (11) zum Halten der Brennelemente auf der Trägerplatte (12) mittels mechanischer Befestigungsmittel befestigt sind, die ermöglichen, die Orientierung des Fingers (14a) um seine Längsachse (14'a) und somit die Richtung der Versetzung zwischen den Achsen (14'a) des Schaftes des Fingers und (22a) der Spitze des Endes des langen Fingers (14) einzustellen.

13. Vorrichtung nach einem beliebigen der Ansprüche 10 bis 12 für das Laden von Brennelementen mit viereckigem Querschnitt in gerade prismatische Stellen mit viereckigem Querschnitt des Kerns (1) eines Kernreaktors, **gekennzeichnet durch** die Tatsache, dass das Werkzeug (11) zum Halten der Brennelemente eine Trägerplatte (12) mit der Form eines Vierecks, dessen Seite im Wesentlichen gleich zweimal der Seite des Querschnitts einer Stelle (3) eines Brennelements (5) in dem Kern (1) eines Kernreaktors ist, vier lange Finger (14a) in den Positionen von Positionierlöchern von vier benachbarten Brennelementen (5) in dem Kern (1) des Kernreaktors und vier kurze Finger (14b) mit kleinerer Länge als die Länge der langen Finger in einer Richtung senkrecht zur Trägerplatte (12) in Positionen entsprechend den Positionen im Querschnitt von vier Positionierlöchern der vier benachbarten Brennelemente, die in der Diagonale auf jedem der oberen Ansätze der Brennelemente (5) in Bezug auf die Positionierlöcher in den Positionen der langen Finger (14a) liegen, umfasst.

14. Vorrichtung nach einem beliebigen der Ansprüche 10 bis 12 im Fall eines Kerns (1) eines Kernreaktors, der von Brennelementen (5), die einen viereckigen Querschnitt haben und in Stellen (3) des Kerns in gerader prismatischer Form angeordnet sind, die viereckige Querschnitte aufweisen und gemäß eines Gitters mit viereckigen Maschen angeordnet sind, gebildet wird, **gekennzeichnet durch** die Tatsache, dass das Werkzeug (11') zum Halten der Brennelemente eine Trägerplatte (12) in Form eines Winkels, die Abmessungen entsprechend den Abmessungen der Querschnitte von drei benachbarten Stellen der Brennelemente (5) in dem Kern (1) hat, drei lange Stifte und drei kurze Stifte umfasst, die vorgesehen sind, jeweils in Positionieröffnungen von drei benachbarten Brennelementen, die im Winkel in dem Kern (1) des Kernreaktors angeordnet sind, einzugreifen, wobei die langen Stifte in erste Öffnungen jedes der Brennelemente und die drei kurzen Stifte jeweils in drei zweite Positionieröffnungen der drei Brennelemente eingeführt werden, die im Winkel angeordnet sind und in der Diagonale in Bezug auf die ersten Aufnahmeöffnungen der langen Stifte liegen.

15. Vorrichtung nach einem beliebigen der Ansprüche 10 bis 14, **gekennzeichnet durch** die Tatsache, dass das Werkzeug (11, 11') zum Halten der Brennelemente eine Vorrichtung (13) zum Aufhängen und Halten analog zu einer Vorrichtung zum Aufhängen und Halten eines oberen Ansatzes (10) eines Brennelements (5) umfasst, der mit der Trägerplatte (12) auf einer Fläche der Trägerplatte (12), entgegengesetzt zur Fläche der Trägerplatte (12), an der hervorspringend die Positionierstifte (14a, 14b) befestigt sind, verbunden ist.
